# EUROPEAN PATENT APPLICATION

(11) **EP 4 806 852 A1**
(43) Date of publication of application: **16.09.2026**
(21) Application number: 25162820.2
(22) Date of filing: 11.03.2025
(51) Int. Cl.: C02F 1/24, C02F 1/78, D21B 1/32, C02F 3/28, C02F 103/28

(54) **A METHOD FOR THE PURIFICATION OF PROCESS WATER OF A PAPER PRODUCTION PLANT COMPRISING DISSOLVED OZONE FLOTATION**

(71) Applicant: MERI Environmental Solutions GmbH, 81243 München (DE)
(72) Inventor: TROUBOUNIS, George, 81735 München (DE); MENKE, Lucas, 82340 Feldafing (DE)
(74) Representative: Henkel & Partner mbB

(57) **Abstract**

The present invention relates to a method for the purification of process water being circulated in at least one process water circuit of a paper production plant, in particular in the case wastepaper is used as raw material, wherein the method comprises a process water purification step, wherein at least a portion of the process water is continuously supplied to the process water purification step and is subjected during the process water purification step to a dissolved gas flotation step using as gas ozone gas, wherein the ozone gas is ozone or is an ozone containing gas mixture.

## Description

The present invention relates to a method for the purification of process water being circulated in at least one process water circuit of a paper production plant, in particular of a plant for paper production from wastepaper or recycled paper, respectively.

During the production of paper in a paper production plant, water is used as a transport medium for the fibers that are required to produce the paper. On account of the high volumes of water required in a paper production plant, namely 3 to 10 liter water per kg produced paper depending on the used fiber raw material, all or at least a major amount of the required water is reused by circulating the water in a process water circuit. Usually, a paper production plant comprises a stock preparation device for preparing a fiber suspension and a paper machine for producing paper from the fiber suspension, wherein the paper machine is connected with the stock preparation device, and wherein the stock preparation device may comprise one or more stages. Typically, the paper machine as well as each stage of the stock preparation device each comprises a separate process water circuit, wherein water is withdrawn via a line from one or more different locations of the respective stage of the stock preparation device or paper machine, such as from one or more different locations of the first stage of the stock preparation device, and is recirculated via a process water line back into another location of the device, which is typically upstream from the one or more locations, from which the process water is withdrawn from the respective stage of the stock preparation device or paper machine. The recirculated water is denoted herein as process water, whereas water being withdrawn from the plant is denoted herein as wastewater, water being introduced into the plant from outside is denoted herein as fresh water and water being led through the paper production machine without being recirculated in a circuit is denoted herein as water. The reuse of the water or of at least a major portion thereof by process water (re)circulation allows to drastically reduce the amount of required fresh water for the paper production meanwhile avoiding wastewater. In some cases, all of the water is (re)circulated in the paper production plant so that only a small amount of fresh water is required in order to compensate the process water being lost in the paper production process due to evaporation or due to its use for preparing chemicals required for the paper production.

In order to prevent an enrichment of pollutants and of other impurities in the process water, i.e. in order to avoid that the chemical oxygen demand (COD) and/or the biochemical oxygen demand (BOD) increases above an acceptable numeric value, the process water is usually purified during the recirculation in the process water circuit. Such a purification of process water is particularly important in the case of the production of paper from wastepaper. During the production of paper from wastepaper, the wastepaper paper is first mixed with water and comminuted while stirring and mixing in a circular or drum pulper of a wastepaper stock preparation device so as to dissolve the individual fibers from the wastepaper in water. Subsequently, the fibers are purified in order to remove non-fibrous impurities from the fibrous pulp, before the fibers are optionally discolored and are finally processed in the paper machine to paper. Optionally, during the process a small amount of primary fibers may be added to the fibers being recovered from the wastepaper. A large number of mechanical, chemical, and biological methods and corresponding reactors are known for purifying process water. Examples for chemical-physical purification methods are filtration and dissolved air flotation, whereas an example for a chemical purification method is the addition of a flocculant in order to effect a precipitation of impurities within the process water. In turn, biological water purification processes comprise the step of bringing the process water to be purified into contact with aerobic or anaerobic microorganisms, which convert the organic impurities being contained in the process water mainly into carbon dioxide and water in the case of aerobic microorganisms and mainly into carbon dioxide and methane in the case of anaerobic microorganisms. Biological process water purification methods have recently been increasingly carried out with anaerobic microorganisms, because in anaerobic process water purification oxygen does not have to be introduced into the bioreactor at high energy input and because high-energy biogas is generated during the purification with anaerobic microorganisms, which can then be used to generate energy. It is also known that the process water is fed, prior to being fed into an anaerobic reactor, into a pre-acidification reactor in which hydrolysis and acidification take place by hydrolyzing and acidifying bacteria. While these bacteria convert during the hydrolysis polymers, such as polysaccharides, polypeptides and fats, into their monomers, such as sugars, amino acids and fatty acids, these monomers are converted during the acidification into organic acids, alcohols, aldehydes, hydrogen, and carbon dioxide. Therefore, a first pre-purification of the process water already takes place in the pre-acidification reactor.

Despite of the aforementioned purification of the process water, the process water is subject to continuous (residual) contamination, in particular by residual biological substances, the amount of which may be drastically reduced, but not completely eliminated by the aforementioned purification methods. Hence, in order to avoid further deposits as well as the formation and growth of microorganism, usually biocides are added to the process water in the process water circuit. The addition of biocide is in particular important in plants for the paper production from wastepaper, because wastepaper or recycled paper, respectively, has starch on its surface, which has been applied to the paper during the paper production in order to improve the strength and smoothness of the paper. Therefore, starch dissolves in the process water during the fiber recovery from wastepaper. However, starch is a good nutrient for microorganisms and without adding biocide to the process water, microorganisms would multiply during the treatment of recycled paper in the process water in an uncontrolled manner. As a consequence of the multiplication of the microorganisms, the pH of the process water would also decrease, with the result that lime on the surface of the wastepaper, which was used as a filler during the paper production, would increasingly dissolve in the process water and would interfere with the paper production process through undesirable, uncontrolled deposits. Furthermore, the increased dissolution of lime in the process water would cause problems in the process water purification steps, in particular in the anaerobic purification step, because the lime would precipitate on the microorganism pellets in the anaerobic reactor and would encapsulate the microorganisms, which would hinder the anaerobic microorganism to fulfil their function during the anaerobic purification. For all these reasons, biocide is added to the process water. However, the biocide contained in the process water has a negative effect on the pre-acidification, presumably because the biocide inhibits hydrolysis, and may negatively affect the anaerobic bacteria.

In view of the above, the object underlying the present invention is to provide a method for the purification of process water being circulated in at least one process water circuit of a paper production plant, in particular of a wastepaper production plant, wherein the method allows to omit the addition of biocide to the process water or at least allows to drastically reduce the amount of biocide to the process water.

In accordance with the present invention, this object is satisfied by providing a method for the purification of process water being circulated in at least one process water circuit of a paper production plant, in particular in the case wastepaper is used as raw material, wherein the method comprises a process water purification step, wherein at least a portion of the process water is continuously supplied to the process water purification step and is subjected during the process water purification step to a dissolved gas flotation step using as gas ozone gas, wherein the ozone gas is ozone or is an ozone containing gas mixture.

This solution bases on the surprising finding that by subjecting the process water to a dissolved gas flotation step using as gas ozone gas, i.e. by subjecting the process water to a dissolved ozone flotation step, the addition of biocide to the process water may be omitted or at least the amount of the biocide added to the process water may be drastically reduced. Ozone is an effective disinfectant and a powerful oxidizing agent and does not only oxidize and thereby convert organic impurities, but also has the ability to inactivate microorganisms, such as bacteria, viruses and fungi. Dissolved gas flotation is a method, in which fine gas bubbles rise through a water composition to be purified, which contains suspended solid matter and/or colloidally dissolved matter as impurities, up to the surface of the water composition being contained in a flotation tank. During the rise of the gas bubbles in the water composition, the gas bubbles adhere to the suspended solid matter and/or colloidally dissolved matter and thereby cause the solid and/or colloidal matter to float to the surface of the water composition, from which the floated impurities are continuously or batchwise removed, for instance by a skimming device. The very small gas bubbles are generated by dissolving the gas under pressure in water, before the so obtained gas-water-mixture is depressurized and fed into the water composition to be purified, where the very small gas bubbles are released from the depressurized gas-water-mixture. By using in accordance with the present invention ozone gas, i.e. ozone or an ozone containing gas mixture, for the dissolved gas flotation, high amounts of ozone may be bubbled through the process water to be purified and in particular much higher amounts of ozone compared to simply dissolve ozone in process water without any pressurization. On account thereof, during the dissolved ozone flotation a particular high number of very small ozone bubbles rise through the process water to be purified and thereby the ozone gas bubbles do not only - due to the enormously high ratio of gas bubble surface area to water volume - efficiently remove solid/colloidal impurities from the process water, from which the solid/colloidal matter is then removed, but also efficiently oxidize and thereby destroy impurities as well as efficiently kill or inactivate, respectively, microorganism. Since the ozone is at least to a major degree consumed or converted to oxygen, respectively, during the dissolved gas flotation on account of the oxidation reactions of ozone with organic impurities during the dissolved gas flotation and because possible remaining ozone converts in the process water to oxygen due to the instability of ozone, the ozone selectively oxidizes organic impurities in the flotation tank, without negatively affecting the microorganism during the optional, but preferred previous hydrolysis and acidification and/or during the optional, but preferred previous anaerobic purification step. Furthermore, the method in accordance with the present invention is easy to control, since the ozone gas quantity, the ozone gas bubble size and thus the ozone-process water exchange area may be easily regulated by appropriately adjusting the pressure, with which the ozone gas is dissolved in water to obtain the ozone-water-mixture, as well as by adjusting the pressure, with which the ozone-water-mixture is depressurized.

As set out above, process water means in accordance with the present invention water being circulated in at least one process water circuit of a paper production plant to thereby distinguish it from wastewater, fresh water or water being consumed during the production of paper, for example by evaporation or by inclusion into the produced paper.

Dissolved gas flotation means in accordance with the present invention a flotation method, in which small gas bubbles rise through water to be purified during the flotation, wherein the gas bubbles have been generated by dissolving the gas under pressure in water, before the so obtained gas-water-mixture is depressurized so as to release small gas bubbles in the water. Dissolved gas flotation may be also denoted as pressure relief flotation.

Furthermore, a process water circuit of a paper production plant means in accordance with the present invention a piping system of one or more water lines enabling to withdraw process water form one or more locations of the paper production plant and to recirculate it to the same or one or more other locations of the paper production plant, wherein the piping system comprises or is connected, respectively, at least with a dissolved gas flotation device, and may comprise or may be connected, respectively, with one or more further purification devices, such as a filtration device, an anaerobic reactor or the like.

The present invention is not particularly restricted concerning the amount of ozone being contained in the ozone gas used for the dissolved gas flotation step. Good results are in particular obtained, when the ozone gas contains at least 50 vol.-% ozone, more preferably at least 80 vol.-% ozone, even more preferably at least 90 vol.-% ozone, still more preferably at least 95 vol.-% ozone and most preferably at least 99 vol.-% ozone. The remainder to 100 vol.-% may be any other gas, preferably an inert gas, such as oxygen o nitrogen. Most preferably, the ozone gas used for the dissolved gas flotation step is ozone without addition of any other gas.

The present invention is not particularly limited concerning the location of the dissolved gas flotation device, in which the dissolved gas flotation step is performed. For instance, the method may be performed in a paper production plant, which comprises a stock preparation device for preparing a fiber suspension and a paper machine for producing paper from the fiber suspension being connected with the stock preparation device, wherein at least one of the stock preparation device and of the paper machine comprises a process water circuit, wherein the process water circuit comprises a dissolved gas flotation device, wherein at least a portion of the process water flowing through the process water circuit is subjected in a dissolved gas flotation device to the dissolved gas flotation step. Preferably, both, the stock preparation device as well as the paper machine each comprises a separate process water circuit, wherein each process water circuit comprises a separate dissolved gas flotation device, wherein at least a portion of the process water flowing through the process water circuit is subjected in a dissolved gas flotation device to the dissolved gas flotation step. The stock preparation device may comprise one, two or more separate stages, which are also denoted in this technical field as loops.

Preferably, the paper machine of the paper production plant comprises, seen from the upstream to the downstream end, a screening section, a forming section, a press section, a drying section and a calendar section, wherein the screening section is connected with a reject treatment device and the forming section is connected with a fiber recovery device, wherein process water is withdrawn from at least one of the reject treatment device and the fiber recovery device, before at least a portion of the process water or all of the process water is subjected to the process water purification step and is then recirculated preferably to the upstream end of the screening device.

In accordance with one embodiment of the present invention, the stock preparation device comprises one stage, which comprises, seen from the upstream to the downstream end, a pulper, a screening device and a dewatering device, wherein the pulper and the screening device are connected with a reject treatment device, wherein process water is withdrawn from at least one of the reject treatment device, the screening device and the dewatering device, before at least a portion of the process water or all of the process water is subjected to the process water purification step and is then recirculated preferably to the pulper.

In accordance with an alternative embodiment of the present invention, the stock preparation device of the paper production plant comprises two or more, preferably two to three and more preferably two stages, wherein each stage comprises a separate process water circuit, wherein the most upstream stage of the stock preparation device comprises, seen from the upstream to the downstream end, a pulper, a screening device and a dewatering device, wherein the pulper and the screening device are connected with a reject treatment device, wherein process water is withdrawn from at least one of the reject treatment device, the screening device and the dewatering device, before at least a portion of the process water or all of the process water is subjected to the process water purification step and is then recirculated preferably to the pulper, wherein each other stage of the stock preparation device comprises, seen from the upstream to the downstream end, a screening device, an oxidation/reduction device and a dewatering device, wherein the screening device and the oxidation/reduction device are connected with a reject treatment device, wherein process water is withdrawn from at least one of the reject treatment device, the screening device and the dewatering device, before at least a portion of the process water or all of the process water is subjected to the process water purification step and is then recirculated preferably to the screening device.

In a further development of the idea of the present invention, it is suggested that the dissolved gas flotation step is performed in a flotation tank, into which continuously or batchwise process water is fed and from which continuously or batchwise purified process water is withdrawn, wherein ozone gas bubbles are bubbled through the process water being contained in the flotation tank to thereby adhere to matter being suspended and/or colloidally dissolved in the process water so as to cause the matter being suspended and/or colloidally dissolved in the process water to float to the surface of the process water, from which it is continuously or batchwise removed, preferably by a skimming device.

Good results are in particular obtained, when the bubbling of the ozone gas bubbles through the process water is effected by dissolving the ozone gas in a gas-liquid dissolving tank in water under pressure, before the obtained pressurized ozone gas containing water mixture is depressurized under formation of ozone gas bubbles in the water, wherein the depressurized ozone gas containing water mixture is discharged into the process water being contained in the flotation tank. The water used in this embodiment may be a portion of the process water to be purified, a portion of the purified water having been withdrawn from the flotation tank, fresh water or a combination of two or more thereof. Preferably, the water used in this embodiment is a portion of the process water to be purified, a portion of the purified water or a mixture of the process water to be purified and a portion of the purified water.

The present invention is not particularly limited concerning the kind, how the ozone used for the dissolved gas flotation step is produced. For example, the ozone may be generated in an ozone generator being arranged within the paper production plant and may be optionally mixed with another gas, before the ozone gas is compressed and injected into the water being contained in the gas-liquid dissolving tank.

Good results are in particular obtained, when the ozone gas is dissolved in the gas-liquid dissolving tank in the water at a pressure of 100 to 1,500 kPa and preferably of 400 to 650 kPa above atmospheric pressure. In turn, it is preferred that the pressurized ozone containing water mixture is then depressurized to an absolute pressure of 50 to 300 kPa.

Particularly preferably, the pressure difference between the pressurized ozone containing water mixture and the depressurized ozone containing water mixture is at least 10 kPa, preferably at least 100 kPa, more preferably 200 to 900 kPa and most preferably 400 to 650 kPa.

Concerning the length of the time period between the dissolution of ozone under pressure in the water and the depressurization of the ozone containing water mixture, the present invention is not particularly restricted. Good results are in particular obtained, when the residence time of the water between the pressurization and the depressurization is 0.1 to 1,000 seconds and preferably 2 to 30 seconds.

In a further development of the idea of the present invention, it is proposed that ozone gas bubbles having an average diameter of less than 500 µm, preferably of less than 100 µm and most preferably of less than 50 µm are bubbled during the dissolved gas flotation step through the process water being contained in the flotation tank.

In principle, the pressurized ozone gas containing water mixture may be depressurized after having been discharged into the process water being contained in the flotation tank, during the discharge into the process water being contained in the flotation tank or before being discharged into the process water being contained in the flotation tank. The first and second mentioned alternatives are technically only difficult to realize. Accordingly, it is preferred that the pressurized ozone gas containing water mixture is depressurized before it is discharged into the process water being contained in the flotation tank, but after leaving the gas-liquid dissolving tank. For instance, the depressurization may be performed in the last mentioned embodiment in a line connecting the gas-liquid dissolving tank and the flotation tank by means of a pressure relief valve, which is comprised in the line.

In accordance with a preferred embodiment of the present invention, the process water to be purified and flowing through the process water circuit is split, before being subjected to the dissolved gas flotation step, into a first portion and into a second portion. While the first portion of the process water to be purified is continuously or batchwise fed into the flotation tank, the second portion of the process water to be purified is fed into the gas-liquid dissolving tank, where the ozone gas is dissolved under pressure in the second portion of the process water so as to generate a pressurized ozone gas containing water mixture. The pressurized ozone gas containing water mixture is then withdrawn from the gas-liquid dissolving tank via a line being equipped with a pressure relief valve so as to depressurize the ozone gas containing water mixture under formation of ozone gas bubbles in the water, before the depressurized ozone gas containing water mixture is fed into the flotation tank so as to release ozone gas bubbles. It is preferred in this embodiment that the process water is split to a first portion comprising 1 to 99 vol.-% and more preferably 25 to 45 vol.-%, with the remainder to 100 vol.-% being the second portion.

In accordance with an alternative preferred embodiment of the present invention, at least a portion of the process water flowing through the process water circuit is continuously or batchwise fed into the flotation tank, wherein the purified process water is split, after having been continuously or batchwise withdrawn from the flotation tank, into a first portion and into a second portion. While the first portion of the purified process water is led through the process water circuit back to the stock preparation device and/or the paper machine, the second portion of the purified process water is fed into the gas-liquid dissolving tank, where the ozone gas is dissolved under pressure in the second portion of the purified process water so as to generate a pressurized ozone gas containing water mixture. The pressurized ozone gas containing water mixture is then withdrawn from the gas-liquid dissolving tank via a line being equipped with a pressure relief valve so as to depressurize the ozone gas containing water mixture under formation of ozone gas bubbles in the water, before the depressurized ozone gas containing water mixture is fed into the flotation tank so as to release ozone gas bubbles. It is preferred in this embodiment that the purified process water is split to a first portion comprising 1 to 99 vol.-% and more preferably 25 to 75 vol.-%, with the remainder to 100 vol.-% being the second portion.

In accordance with still an alternative preferred embodiment of the present invention, the process water to be purified and flowing through the process water circuit is split, before being subjected to the dissolved gas flotation step, into a first portion and into a second portion, and the purified process water is split, after having been continuously or batchwise withdrawn from the flotation tank, into a first portion and into a second portion. While the first portion of the process water to be purified is continuously or batchwise fed into the flotation tank, the first portion of the purified process water is fed through the process water circuit back to the stock preparation device and/or the paper machine. Both, the second portion of the process water to be purified and as well as the second portion of the purified process water are mixed with each other, before the so obtained process water mixture is fed into the gas-liquid dissolving tank, where the ozone gas is dissolved under pressure in the process water mixture so as to generate a pressurized ozone gas containing water mixture. The pressurized ozone gas containing water mixture is then withdrawn from the gas-liquid dissolving tank via a line being equipped with a pressure relief valve so as to depressurize the ozone gas containing water mixture under formation of ozone gas bubbles in the water, before the depressurized ozone gas containing water mixture is fed into the flotation tank so as to release ozone gas bubbles. It is preferred in this embodiment that the process water is split to a first portion comprising 1 to 99 vol.-% and more preferably 25 to 75 vol.-%, with the remainder to 100 vol.-% being the second portion, and that the purified process water is split to a first portion comprising 1 to 99 vol.-% and more preferably 25 to 75 vol.-%, with the remainder to 100 vol.-% being the second portion.

In order to increase the separation efficiency of the dissolved gas flotation step, it is proposed in a further development of the idea of the present invention to add at least one flocculant to the process water, before the process water is fed into the flotation tank. Optionally, also a pH adjustment agent may be added to the process water, before the process water is fed into the flotation tank.

As set out above, it is a particular advantage of the method in accordance with the present invention that it allows to omit the addition of biocide to the process water or at least allows to drastically reduce the amount of biocide to the process water. In view of this, it is particularly preferred that the process water of at least one and preferably the process water of each of the process water circuits of the paper production plant contains less than 1,500 g biocide per ton produced paper, more preferably less than 150 g biocide per ton produced paper and still more preferably less than 10 g biocide per ton produced paper. Most preferably, the process water of at least one and preferably the process water of each of the process water circuits of the paper production plant contains no biocide at all.

The process water may be further purified by using one or more other purification steps in addition to the dissolved gas flotation step. These further purification steps may be performed in sequence with the dissolved gas flotation step, i.e. the process water is subjected before or after the dissolved gas flotation step to one or more further purification steps. Alternatively, the further purification steps may be performed in parallel with the dissolved gas flotation step, i.e. the process water is split into two or more portions, wherein one portion of the process water is subjected to the dissolved gas flotation step, whereas another portion of the process water is subjected to one or more further purification steps, before the two or more portions are (re)combined, before being recycled to the corresponding stock preparation device or paper machine. The further purification steps may be a solids removal step, a purification step with anaerobic microorganism in an anerobic reactor, a filtration step or a mixture of two or more thereof. If the purification steps are performed in sequence with the dissolved gas flotation step, it is preferred that the process water being continuously supplied to the process water purification step is subjected, prior to the dissolved gas flotation step, to a solids removal step and thereafter to a purification with anaerobic microorganism in an anerobic reactor, before it is subjected to the dissolved gas flotation step and thereafter to a filtration step.

Subsequently, the present invention is described by means of illustrative, but not limiting figures, in which:

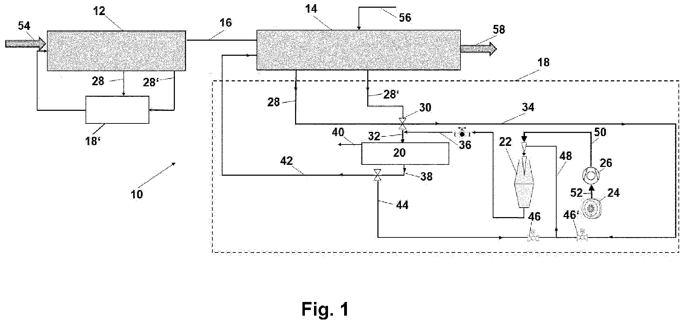

- Fig. 1: shows a schematic view of a paper production plant according to one embodiment, in which the method in accordance with the present invention may be performed.

The paper production plant 10 shown in figure 1 comprises a stock preparation device 12 for preparing a fiber suspension and a paper machine 14 for producing paper from the fiber suspension, wherein the paper machine 14 is arranged downstream of and is connected with the stock preparation device 12 via a connection line 16. Each of the stock preparation device 12 and of the paper machine 14 comprises a process water circuit 18, 18'. Both process water circuits 18, 18' are constructed the same, but for the ease of illustration the details of the process water circuit are only shown for the process water circuit 18 of the paper machine 14, whereas the process water circuit 18' of the stock preparation device 12 is only schematically shown as one box, which corresponds to the box 18 in broken lines shown below the paper machine 14.

The process water circuit 18 comprises a flotation tank 20, a gas-liquid dissolving tank 22, an ozone generator 24 or ozone storage tank and an ozone compressor 26. Two process water lines 28, 28' lead from two different locations of the paper machine 14 to a valve 30, from which a first connection line 32 leads into the flotation tank 20 and a second connection line 34 leads into the gas-liquid dissolving tank 22. The flotation tank 22 is further connected with an inlet line 36 for an ozone-water mixture being provided with a pressure relief valve 37, with an outlet line 38 for purified process water and with an outlet line 40 for impurities. The outlet line 38 for purified process water splits into a process water recirculation line 42 leading back into the paper machine 14 as well as into a third connection line 44. Both, the second connection line 34 and the third connection line 44 are each equipped with a valve 46, 46' and both connection lines 34, 44 combine to a water inlet line 48, which leads into the gas-liquid dissolving tank 22. The gas-liquid dissolving tank 22 further comprises an ozone inlet line 50, which is further connected with the ozone compressor 26, which in turn is further connected via an ozone line 52, which is further connected with the ozone generator 24. Finally, the paper machine further comprises a raw material inlet line 54, a fresh water inlet line 56 and a paper outlet 58.

During the operation of the plant 10, process water is continuously withdrawn from two different locations of the paper machine 14 via the process water lines 28, 28' and split in valve 30 into a first portion of process water to be purified and into a second portion of process water to be purified. The first portion of the process water to be purified is continuously fed into the flotation tank 20 and is purified therein so as to separate purified process water, which is withdrawn from the flotation tank 20 via the outlet line 38, from impurities, which were suspended and colloidally dissolved in the process water, wherein the impurities are withdrawn from the flotation tank 20 via the outlet line 40. The purified process water being withdrawn from the flotation tank 20 via the outlet line 38 is split into a first portion and into a second portion, wherein the first portion of the purified process water is recirculated via the process water recirculation line 42 into the paper machine 14, whereas the second portion of the purified process water is mixed with the second portion of the process water to be purified. The combined process water mixture is led via the water inlet line 48 into the gas-liquid dissolving tank 22, wherein ozone gas being generated in the ozone generator 24 and being compressed in the ozone compressor 26 is led into the gas-liquid dissolving tank 22 via the ozone inlet line 50 and is dissolved therein under pressure in the process water mixture. The pressurized ozone gas containing water mixture is removed from the gas-liquid dissolving tank 22 via the line 36, is depressurized in the pressure relief valve 37 an dis then led into the flotation tank 20, in which ozone gas bubbles are released and rise int eh flotation tank 20 through the process water contained therein. During the rise of the gas bubbles in the process water composition, the gas bubbles adhere to the impurities, which are suspended solid matter and/or colloidally dissolved matter, and thereby cause the solid and/or colloidal matter to float to the surface of the water composition, from which the floated impurities are continuously or batchwise removed, for instance by a skimming device, via the outlet line 40.

### Reference numerals

- 10: Paper production plant
- 12: Stock preparation device
- 14: Paper machine
- 16: Connection line
- 18, 18': Process water circuit
- 20: Flotation tank
- 22: Gas-liquid dissolving tank
- 24: Ozone generator
- 26: Ozone compressor
- 28, 28': Process water line
- 30: Valve
- 32: First connection line
- 34: Second connection line
- 36: Inlet line for an ozone-water mixture
- 37: Pressure relief valve
- 38: Outlet line for purified process water
- 40: Outlet line for impurities
- 42: Process water recirculation line
- 44: Third connection line
- 46, 46': Valve
- 48: Water inlet line
- 50: Ozone inlet line
- 52: Ozone line
- 54: Raw material inlet line
- 56: Fresh water inlet line
- 58: Paper outlet

## Claims

1. A method for the purification of process water being circulated in at least one process water circuit of a paper production plant, in particular in the case wastepaper is used as raw material, wherein the method comprises a process water purification step, wherein at least a portion of the process water is continuously supplied to the process water purification step and is subjected during the process water purification step to a dissolved gas flotation step using as gas ozone gas, wherein the ozone gas is ozone or is an ozone containing gas mixture.

2. The method in accordance with claim 1, wherein the paper production plant comprises a stock preparation device for preparing a fiber suspension and a paper machine for producing paper from the fiber suspension being connected with the stock preparation device, wherein at least one of the stock preparation device and of the paper machine comprises a process water circuit and preferably both of the stock preparation device and of the paper machine each comprise a separate process water circuit, wherein each of the process water circuits comprises a dissolved gas flotation device, wherein at least a portion of the process water flowing through a process water circuit is subjected in a dissolved gas flotation device to the dissolved gas flotation step.

3. The method in accordance with claim 2, wherein the paper machine comprises, seen from the upstream to the downstream end, a screening section, a forming section, a press section, a drying section and a calendar section, wherein the screening section is connected with a reject treatment device and the forming section is connected with a fiber recovery device, wherein process water is withdrawn from at least one of the reject treatment device and the fiber recovery device, before at least a portion of the process water or all of the process water is subjected to the process water purification step and is then recirculated preferably to the upstream end of the screening device.

4. The method in accordance with claim 2 or 3, wherein the stock preparation device comprises one stage, which comprises, seen from the upstream to the downstream end, a pulper, a screening device and a dewatering device, wherein the pulper and the screening device are connected with a reject treatment device, wherein process water is withdrawn from at least one of the reject treatment device, the screening device and the dewatering device, before at least a portion of the process water or all of the process water is subjected to the process water purification step and is then recirculated preferably to the pulper.

5. The plant in accordance with claim 2 or 3, wherein the stock preparation device comprises two or more, preferably two to three and more preferably two stages, wherein each stage comprises a separate process water circuit, wherein the most upstream stage of the stock preparation device comprises, seen from the upstream to the downstream end, a pulper, a screening device and a dewatering device, wherein the pulper and the screening device are connected with a reject treatment device, wherein process water is withdrawn from at least one of the reject treatment device, the screening device and the dewatering device, before at least a portion of the process water or all of the process water is subjected to the process water purification step and is then recirculated preferably to the pulper, wherein each other stage of the stock preparation device comprises, seen from the upstream to the downstream end, a screening device, an oxidation/reduction device and a dewatering device, wherein the screening device and the oxidation/reduction device are connected with a reject treatment device, wherein process water is withdrawn from at least one of the reject treatment device, the screening device and the dewatering device, before at least a portion of the process water or all of the process water is subjected to the process water purification step and is then recirculated preferably to the screening device.

6. The method in accordance with any of the preceding claims, wherein the dissolved gas flotation step is performed in a flotation tank, into which continuously or batchwise process water is fed and from which continuously or batchwise purified process water is withdrawn, wherein ozone gas bubbles are bubbled through the process water being contained in the flotation tank to thereby adhere to matter being suspended in the process water so as to cause the matter being suspended in the process water to float to the surface of the process water, from which it is continuously or batchwise removed, preferably by a skimming device.

7. The method in accordance with claim 6, wherein the bubbling of the ozone gas bubbles through the process water is effected by dissolving the ozone gas in a gas-liquid dissolving tank in water under pressure, before the obtained pressurized ozone gas containing water mixture is depressurized under formation of ozone gas bubbles in the water, wherein the depressurized ozone gas containing water mixture is discharged into the process water being contained in the flotation tank, wherein preferably the water is a portion of the process water to be purified, a portion of the purified water having been withdrawn from the flotation tank or fresh water, wherein preferably ozone is generated in an ozone generator, optionally mixed with another gas, before the ozone gas is compressed and injected into the water being contained in the gas-liquid dissolving tank.

8. The method in accordance with claim 7, wherein the ozone gas is dissolved in the gas-liquid dissolving tank in the water at a pressure of 100 to 1,500 kPa and preferably of400 to 650 kPa above atmospheric pressure, and wherein the pressurized ozone containing water mixture is depressurized to an absolute pressure of 50 to 300 kPa, wherein preferably the pressure difference between the pressurized ozone containing water mixture and the depressurized ozone containing water mixture is at least 10 kPa, preferably at least 100 kPa, more preferably 200 to 900 kPa and most preferably 400 to 650 kPa.

9. The method in accordance with claim 7 or 8, wherein the residence time of the water between the pressurization and the depressurization is 0.1 to 1,000 seconds and preferably 2 to 30 seconds.

10. The method in accordance with any of claims 6 to 9, wherein ozone gas bubbles having an average diameter of less than 500 µm, preferably of less than 100 µm and most preferably of less than 50 µm are bubbled during the dissolved gas flotation step through the process water being contained in the flotation tank.

11. The method in accordance with any of claims 7 to 10, wherein the pressurized ozone gas containing water mixture is depressurized after having been discharged into the process water being contained in the flotation tank, during the discharge into the process water being contained in the flotation tank or preferably before being discharged into the process water being contained in the flotation tank, but after leaving the gas-liquid dissolving tank, preferably in a line being equipped with a pressure relief valve.

12. The method in accordance with any of claims 7 to 11, wherein the process water to be purified and flowing through the process water circuit is split, before being subjected to the dissolved gas flotation step, into a first portion and into a second portion, wherein the first portion of the process water to be purified is continuously or batchwise fed into the flotation tank, whereas the second portion of the process water to be purified is fed into the gas-liquid dissolving tank, where the ozone gas is dissolved under pressure in the second portion of the process water so as to generate a pressurized ozone gas containing water mixture, which is then withdrawn from the gas-liquid dissolving tank via a line being equipped with a pressure relief valve so as to depressurize the ozone gas containing water mixture under formation of ozone gas bubbles in the water, before the depressurized ozone gas containing water mixture is fed into the flotation tank so as to release ozone gas bubbles.

13. The method in accordance with any of claims 7 to 11, wherein at least a portion of the process water flowing through the process water circuit is continuously or batchwise fed into the flotation tank, wherein the purified process water is split, after having been continuously or batchwise withdrawn from the flotation tank, into a first portion and into a second portion, wherein the first portion of the purified process water is led through the process water circuit back to the stock preparation device and/or the paper machine, whereas the second portion of the purified process water is fed into the gas-liquid dissolving tank, where the ozone gas is dissolved under pressure in the second portion of the purified process water so as to generate a pressurized ozone gas containing water mixture, which is then withdrawn from the gas-liquid dissolving tank via a line being equipped with a pressure relief valve so as to depressurize the ozone gas containing water mixture under formation of ozone gas bubbles in the water, before the depressurized ozone gas containing water mixture is fed into the flotation tank so as to release ozone gas bubbles.

14. The method in accordance with any of claims 7 to 11, wherein the process water to be purified and flowing through the process water circuit is split, before being subjected to the dissolved gas flotation step, into a first portion and into a second portion, wherein the first portion of the process water to be purified is continuously or batchwise fed into the flotation tank, wherein the purified process water is split, after having been continuously or batchwise withdrawn from the flotation tank, into a first portion and into a second portion, wherein the first portion of the purified process water is fed through the process water circuit back to the stock preparation device and/or the paper machine, whereas the second portion of the process water to be purified and the second portion of the purified process water are mixed with each other, before the so obtained process water mixture is fed into the gas-liquid dissolving tank, where the ozone gas is dissolved under pressure in the process water mixture so as to generate a pressurized ozone gas containing water mixture, which is then withdrawn from the gas-liquid dissolving tank via a line being equipped with a pressure relief valve so as to depressurize the ozone gas containing water mixture under formation of ozone gas bubbles in the water, before the depressurized ozone gas containing water mixture is fed into the flotation tank so as to release ozone gas bubbles.

15. The method in accordance with any of the preceding claims, wherein the process water of at least one and preferably the process water of each of the process water circuits contains less than 1,500 g biocide per ton produced paper, preferably less than 150 g biocide per ton produced paper and more preferably less than 10 g biocide per ton produced paper and most preferably no biocide.
